# EUROPEAN PATENT APPLICATION

(11) **EP 3 422 220 A1**
(43) Date of publication of application: **02.01.2019**
(21) Application number: 18179981.8
(22) Date of filing: 26.06.2018
(51) Int. Cl.: G06F 17/50

(54) **METHOD OF OPTIMIZING THE FIBERS ARRANGEMENT AND ORIENTATION IN ULTRA-HIGH PERFORMANCE CONCRETE**

(30) Priority: 27.06.2017 CZ 20170374
(71) Applicant: Ceské vysoké ucení technické v Praze, 16606 Praha 6 (CZ)
(72) Inventor: TEJ, Petr, 27706 Luzec nad Vltavou (CZ); KOLISKO, Jiri, 16000 Praha 6 (CZ)
(74) Representative: Kratochvil, Vaclav

(57) **Abstract**

According to the new method of optimizing the fibers arrangement and orientation in ultra-high performance concrete, the load imposed on the building element to be manufactured with defined dimensions is calculated using common methods and based on this known load, the distribution of tensile stress in this building element is determined. Subsequently, the tensile stress distribution in the given building element is determined by creating a computer geometric model of this building element, and the volume of the geometric model of the building element is split by a spatial mesh system into small discrete volumes from the group of shapes cube, cuboid, pyramid. Then, both the magnitudes of tensile stresses, and spatial vectors of the tensile stresses directions at individual discrete nodes of the mesh are determined. Based on data obtained as described above, are designed both the directions of reinforcements at individual discrete nodes of the mesh given by the resulting direction of the tensile stress, and also the diameters of individual reinforcement fibers corresponding to the magnitudes of these tensile stresses. The resulting spatial reinforcement mesh is modeled by means of a CAD software and printed out using the Direct Metal Laser Sintering 3D metal printing method in case of metal fibers and in case of plastic fibers using one of the 3D printing methods from the group Selective Laser Sintering SLS, Fused Deposition Modeling FDM, or Stereolithography SLA. The produced spatial reinforcement mesh is inserted into the formwork as a substitute for the freely distributed fibers, ultra-high performance concrete is poured in, and when it hardens, the final building element is demoulded.

## Description

### Background of the Invention

The present invention deals with a new method of arrangement and orientation of reinforcement fibers in ultra-high performance fiber-reinforced concrete, abbreviated as UHPFRC, using the 3D print technology.

### Description of Prior Art

So far, the following procedure has been used to produce ultra-high performance fiber-reinforced concrete. First, for a given building element, knowing its dimensions, the load imposed on this element, such as a beam, is calculated. Then, the amount of fibers is estimated, and this amount is mixed into the UHPC mixture. The concrete mixture with freely distributed fibers that are part of the mixture is poured into the formwork. After the concrete hardens, the building element is demoulded.

As the biggest issue with UHPFRC, this new composite material, is generally considered the intricate way how to control the distribution of fibers in the UHPC matrix. Fiber distribution significantly affects the mechanical properties of the material. The fibers may be metal or plastic.

### Summary of the Invention

Disadvantages mentioned above are removed by a method of optimizing the fibers arrangement and orientation in ultra-high performance concrete, which starts with calculating the load imposed on the building element to be manufactured with defined dimensions, and based on this known load, the distribution of tensile stress in this building element is determined. The invention deals with improving the mechanical properties of the elements made of UHPFRC with ideally distributed fibers, or rather a spatial reinforcement mesh, in a composite material. The optimized arrangement, orientation and amount of reinforcement in the composite material will be achieved by using the 3D print method.

The principle of the new solution is that the tensile stress distribution in the given building element is determined by creating a computer geometric model of this building element. The volume of the geometric model of the building element is then split by a spatial mesh system into small discrete volumes from the group of shapes cube, cuboid, pyramid. The shape of a discrete volume is selected based on the shape of the building element, and the size of these discrete volumes is selected based on the requested fineness of the resulting spatial reinforcement mesh. In the next step, a numeric method is used to determine both the magnitudes of tensile stresses, and also the spatial vectors of directions of the tensile stresses at individual discrete nodes of the mesh. Based on data obtained as described above, are designed both the directions of reinforcements at individual discrete nodes given by the known resulting direction of the tensile stress, and also the diameters of individual reinforcement fibers corresponding to the magnitudes of these tensile stresses. The resulting spatial reinforcement mesh is modeled by means of a CAD software and printed out using the Direct Metal Laser Sintering method in case of metal fibers and in case of plastic fibers by some of the 3D printing methods from the group Selective Laser Sintering SLS, Fused Deposition Modeling FDM or Stereolithography SLA. Subsequently, the produced spatial reinforcement mesh is inserted into the formwork as a substitute for the freely distributed fibers, ultra-high performance concrete is poured in, and when it hardens, the final building element is demoulded.

The magnitudes of tensile stresses and spatial vectors of their directions at the individual discrete nodes of the mesh can advantageously be determined by the finite element method, boundary element method, or finite difference method.

The advantage of optimizing the arrangement and orientation of fibers in the ultra-high performance concrete UHPC using the 3D printing technology is that the reinforcement mesh precisely follows the direction of the main tensile stresses in the concrete element and it is optimized to distribute them. The spatial structure of the reinforcement may be produced in arbitrary shape arrangement. Spatial reinforcement mesh created as described may be designed in more economical shape structure required to manage the tensile stresses caused by the imposed load. It is possible to design and produce arbitrarily branched structure and spatial reinforcement meshes, which eliminate the setbacks of the current reinforcements.

### Explanation of Drawings

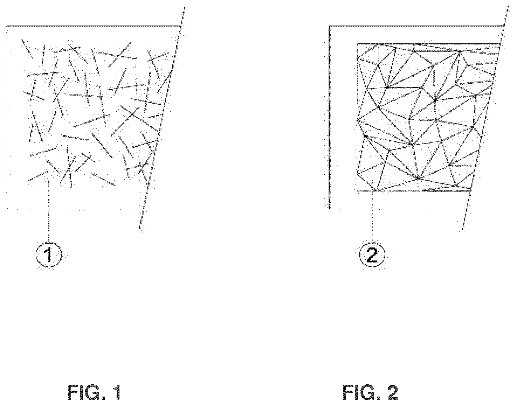

Fig. 1 shows the current method and illustrates how the fibers are distributed in the UHPC matrix. Fig. 2 shows the optimized spatial reinforcement mesh produced by the 3D printing technology inserted into the UHPC matrix.

### Detailed Description of the Preferred Embodiment

In order to present a comparison, Fig. 1 shows an example of the current method of the ultra-high performance concrete reinforcement by distributed fibers 1, which are distributed in the building element more or less accidentally.

Current computational processes and manufacturing technologies however make it possible to design and create a precise spatial reinforcement mesh in a UHPFRC element optimized to distribute tensile stresses, see Fig. 2.

The optimized method of the UHPFRC element reinforcement by means of spatial reinforcement meshes produced using the 3D printing technology consists of the following steps.

At first, the load imposed on the produced building element with defined dimensions is calculated and based on this known load, the distribution of tensile stress in this building element is determined. Then, a computer geometric model of the given building element is created using a software. The design of optimal layering of fibers in the building element is based on numeric modeling, which uses the finite element method, abbreviated as FEM. This method allows to determine and show exact behaviour of the tensile stresses in the geometric model of the loaded building element. The principle of FEM is a numeric method serving to simulate the behaviour of tensile stresses, deformations and other parameters in the created physical model. It is based on the principle of discretization of an uninterrupted continuum into a defined, definite number of elements, while the examined parameters are determined at individual nodes. For this purpose, the volume of the geometric model of the building element is split by a spatial mesh system into small discrete volumes from the group of shapes cube, cuboid, pyramid. The shape of a discrete volume is selected based on the shape of the building element, and the size is selected based on the requested fineness of the resulting spatial reinforcement mesh. Then, at each node of the spatial reinforcement mesh, the magnitudes of tensile stresses and spatial vectors of their directions are calculated. The magnitudes of tensile stresses and their directions at individual discrete nodes are determined, for example, by the finite element method, boundary element method, or finite difference method. Other methods may be used as well, of course. Based on data obtained as described above, are designed both the directions of reinforcements at individual discrete nodes of the mesh given by the resulting direction of the tensile stress, and also the diameters of individual reinforcement fibers corresponding to the magnitudes of these tensile stresses. Thus created spatial reinforcement mesh 2, Fig. 2, which precisely follows the directions of the tensile stresses in the model, is modeled by means of a CAD software in so-called 3D modelers. Subsequently, the model is transformed into the format stl - stereolithography, and prepared for the 3D print in metal or plastic. The spatial structure of the reinforcement printed out by 3D printers may be produced in arbitrary shape arrangement. The spatial mesh printing method depends on the material of the reinforcement mesh. For 3D printing of a metal mesh the method known as DMLS - Direct Metal Laser Sintering will be used. For 3D printing of plastic meshes standard 3D print methods will be used, such as SLS - Selective Laser Sintering, FDM - Fused Deposition Modeling, or SLA - Stereolithography, which is similar to the SLS method. The spatial reinforcement mesh 2 created as described is inserted into the formwork and the UHPC concrete mixture is poured in. When it hardens, the element is demoulded.

The new method of reinforcement is therefore supported by a proven finite element calculation method FEM, which allows to show exactly the tensile stresses behaviour in a computer model of the loaded element. Considering such tensile stresses, a spatial reinforcement mesh is designed, which precisely follows the directions of tensile stresses. Individual directions of tensile stresses are subsequently connected into a spatial mesh. The 3D print is a potential technology to be used for this reinforcement method. The spatial structure of the reinforcement mesh printed out by the 3D printers can be manufactured with arbitrary shape arrangement. Spatial reinforcement mesh created as described may be manufactured in the shape optimized with respect to the weight of the reinforcement, its arrangement and directions, which are required to distribute the tensile stresses caused by the imposed load. The spatial reinforcement mesh will be designed and printed out for a specific concrete element and given load. From this point of view, the fibers arrangement, or rather the reinforcement mesh arrangement, will be optimal for the given element, and as a result, the loading capacity of the element will be greater than with accidentally distributed fibers.

### Industrial Applicability

The invention can advantageously be used in the industrial production of precast elements in plants producing precast concrete products. 3D printing of the optimized spatial reinforcement mesh and subsequent fixing it by the UHPC matrix will allow to produce precast building elements, such as façade panels, spacing filling structures, etc.

## Claims

1. Method of optimizing the fibers arrangement and orientation in ultra-high performance concrete when at first, the load imposed on the produced building element with given dimensions is calculated, and based on the known load the tensile stress distribution in this building element is determined, **characterized by the fact that** based on the tensile stress distribution in the given building element the geometric model of this building element is created and the volume of the geometric model of the building element is split using a spatial mesh system into discrete volumes from the group of shapes cube, cuboid, pyramid, while the shape of the discrete volume is selected based on the shape of the building element, and its size is selected based on the requested fineness of the resulting spatial reinforcement mesh (2), then a numeric method is used to determine both the magnitudes of the tensile stresses, and also the spatial vectors of directions of the tensile stresses at individual discrete nodes of the mesh, and based on such obtained data are designed both the directions of reinforcements at individual discrete nodes of the mesh given by the resulting direction of the tensile stress, and also the diameters of individual reinforcement fibers corresponding to the magnitudes of these tensile stresses, and thus created spatial reinforcement mesh (2) is modeled by means of a CAD software.

2. The method according to claim 1 **characterized by the fact that** the magnitudes of the tensile stresses and the spatial vectors of their directions at the individual discrete nodes of the mesh are determined using the finite element method.

3. The method according to claim 1 **characterized by the fact that** the magnitudes of the tensile stresses and the spatial vectors of their directions at the individual discrete nodes of the mesh are determined using the boundary element method.

4. The method according to claim 1 **characterized by the fact that** the magnitudes of the tensile stresses and the spatial vectors of their directions at the individual discrete nodes of the mesh are determined using the finite difference method.
